# EUROPEAN PATENT SPECIFICATION

(11) **EP 2 817 184 B1**
(45) Date of publication and mention of the grant of the patent: **30.12.2020**
(21) Application number: 13708998.3
(22) Date of filing: 25.02.2013
(51) Int. Cl.: B60S 1/38

(54) **WIPER BLADE**
WISCHERBLATT
BALAI D'ESSUIE-GLACES

(30) Priority: 24.02.2012 US 201261603222 P
(43) Date of publication of application: 31.12.2014
(60) Divisional application: 20168711.8 / 3 699 040; 20168784.5 / 3 699 041
(73) Proprietor: Pylon Manufacturing Corp., Deerfield Beach, FL 33441 (US)
(72) Inventor: TOLENTINO, Vambi, Raymundo, Coconut Creek, FL 33066 (US); PEERS, Robert, Peter, Boca Raton, FL 33433 (US)
(74) Representative: Carpmaels & Ransford LLP
(86) International application number: PCT/US2013/027684
(87) International publication number: WO 2013/126907

(56) References cited:
- EP-A2- 1 612 113
- US-A1- 2007 089 257
- US-A1- 2010 236 008
- US-A1- 2010 281 645

## Description

### CROSS REFERENCE TO RELATED APPLICATIONS

This application claims the benefit of U.S. Provisional Application No. 61/603,222 filed February 24, 2012 and U.S. Patent Application No. 13/776,376, filed February 25, 2013.

### FIELD OF THE INVENTION

This invention relates to the field of windshield wiper blades.

### BACKGROUND

Typical wiper blades used on vehicles are plagued with numerous persistent drawbacks. In an effort to improve upon the traditional, bracketed wiper blade, the beam blade (or flat blade) was developed, keeping a lower profile and generally providing a more uniform force distribution than most bracketed wiper blades. However beam blades do not have the lateral stability of bracketed blades, and can have problems with wrapping (i.e. keeping contact between the outer edges of the wiper blade and the windshield) when their curvature is not sufficiently sharp for the windshield, and banding (i.e. losing contact with the windshield in the middle of the wiper blade, thereby leaving an unwiped band) when their curvature is too sharp for the windshield. Accordingly, beam blades may serve well for original equipment (i.e. the wiper blades installed by manufacturers on cars that are designed specifically for that car, but can experience problems on certain vehicles if designed as aftermarket wiper blades (i.e. replacement blades designed to be used on a variety of different windshields where the manufacturer does not know what vehicle the blade will be used on).

The first generation of hybrid wiper blades developed improved on beam blade performance in these circumstances. These blades combine the use of brackets with a beam to improve on the blades' wrapping characteristics without creating problems with banding. The disclosed concept provides an improvement on the first generation hybrid wiper blades, using a combination of traditional brackets and either beams or flat brackets.

The following patent applications disclose wiper blades: U.S. Patent Application Serial Nos. 13/453,601; 13/679,646; 13/572,100 and 13/587,389.

US2010/0281645A1 describes a wiper blade assembly comprising a guide beam adapted to transfer the load and motion applied from the wiper arm to the wiper blade, the guide beam having initial curvature, a plurality of connection members provided along the longitudinal direction of the guide beam and a plurality of auxiliary beams rotatably coupled to the connection members, serving to hold the wiper blade.

US2007/0089257A1 describes a wiper blade and vehicle wiper device comprising a wiper blade, cover, lever and a nozzle mechanism.

EP 1 612 113 A2 describes a wiper blade assembly supported by a wiper arm in asymmetrical manner.

### BRIEF SUMMARY OF THE INVENTION

The following presents a simplified summary of the invention in order to provide a basic understanding of some aspects of the invention. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later.

According to the invention a wiper blade has a wiper strip, a primary frame, and a pair of secondary frames. The primary frame having a connection device capable of connecting the wiper blade to a wiper arm disposed on a top side of the primary frame, and a connection structure disposed, on opposite ends of the primary frame, and further comprising a horizontal wall from which two side walls descend vertically. The pair of secondary frame, each have a flattened central pivot connection portion and two leg portions, wherein each leg portion is straight and extends from the flattened central pivot connection portion, a pivot structure disposed on the flattened central pivot connection portion of the secondary frames wherein the pivot structure of the secondary frames are connected to the connection structures on the ends of the primary frame.

In one embodiment a wiper blade has a wiper strip, a force distribution structure having opposing ends, and a cover. The cover comprises a cover center section having two end portions and two cover side sections that are made from a soft, elastic material, wherein the cover side sections cover the end portions of the cover center section and extend to and cover the opposing ends of the wiper blade.

In one embodiment, a wiper blade has a wiper strip, a primary frame and a pair of beams. The primary frame has a top side and opposite ends, a connection device capable of connecting the wiper blade to a wiper arm disposed on the top side of the primary frame, and a connection structure disposed, on each of the opposite ends of the primary frame. The pair of beams each beam have a center portion and two leg portions extending in opposite directions from the center portion; wherein a pivot structure is connected to the center portion of the beams, and connects to the connection structure on the ends of the primary frame.

### Brief Description of the Figures

Fig. 1 illustrates a perspective view from above of an embodiment of the disclosed concepts.
Fig. 2 illustrates a perspective view from above of an embodiment of the disclosed concepts without a cover attached.
Fig. 3 illustrates a frontal view of the embodiment of the disclosed concepts depicted in Fig. 2.
Fig. 4 illustrates a perspective view from above of an embodiment of the primary frame.
Fig. 5 illustrates a view of the primary frame of an embodiment of the disclosed concepts along the longitudinal axis of the wiper blade.
Fig. 6 illustrates a side view of a secondary frame of an embodiment of the disclosed concepts, wherein the beam is shown flattened for simplicity.
Fig. 7 illustrates a perspective view from above of a secondary frame of an embodiment of the disclosed concepts, wherein the beam is shown flattened for simplicity.
Fig. 8 illustrates a rivet which may be used in the joint of an embodiment of the disclosed concepts.
Fig. 9 illustrates a perspective view from the side of a turn-buckle holder used in a joint of an embodiment of the disclosed concepts.
Fig. 10 illustrates a view of a turn-buckle holder used in a joint of an embodiment of the disclosed concepts along the axis of the channel.
Fig. 11 shows a bottom view of a turn-buckle holder used in a joint of an embodiment of the disclosed concepts.
Fig. 12 shows a cross-sectional view of a turn-buckle holder used in a joint of an embodiment of the disclosed concepts through the turn-buckle holder's channel.
Fig. 13 illustrates a perspective view from the side of a holder half used in a joint in an embodiment of the disclosed concepts.
Fig. 14 illustrates a view of a holder half used in a joint in an embodiment of the disclosed concepts along the axis of the channel.
Fig. 15 illustrates a view of a holder half used in a joint in an embodiment of the disclosed concepts along the axis of the rivet passage.
Fig. 16 illustrates a bottom view of the holder half used in a joint in an embodiment of the disclosed concepts.
Fig. 17 illustrates a frontal view of a symmetric tertiary bracket of an embodiment of the disclosed concepts.
Fig. 18 illustrates a perspective view from above of a symmetric tertiary bracket of an embodiment of the disclosed concepts.
Fig. 19 illustrates a frontal view of an asymmetric tertiary bracket of an embodiment of the disclosed concepts.
Fig. 20 illustrates a perspective view from above of an asymmetric tertiary bracket of an embodiment of the disclosed concepts.
Fig. 21 illustrates a perspective view of the pivoting stud of an embodiment of the disclosed concepts.
Fig. 22 illustrates a side view of a "soft" cover of an embodiment of the disclosed concepts.
Fig. 23 illustrates a perspective view from above of a "soft" cover of an embodiment of the disclosed concepts.
Fig. 24 illustrates cross sectional view of the inside of the "soft cover" of an embodiment of the disclosed concepts.
Fig. 25 illustrates a perspective view from above of the cover center section of the "soft" section of an embodiment of the disclosed concepts.
Fig. 26 illustrates a perspective view from below of the cover center section of the "soft" cover of an embodiment of the disclosed concepts.
Fig. 27 illustrates a perspective view from above of the end portion of the cover side sections of the "soft" cover of an embodiment of the disclosed concepts.
Fig. 28 illustrates a perspective view from below of a cover side sections of the "soft" cover of an embodiment of the disclosed concepts.
Fig. 29 illustrates a frontal view of a cover side section of the "soft" cover of an embodiment of the disclosed concepts.
Fig. 30 illustrates a perspective view from above of a "hard" cover of an embodiment of the disclosed concepts.
Fig. 31 illustrates a perspective view from above of the center cover segment of a "hard" cover of an embodiment of the disclosed concepts.
Fig. 32 illustrates a perspective view from below of the end section of the center cover segment of a hard cover of an embodiment of the disclosed concepts.
Fig. 33 illustrates a side view of the center cover segment of a hard cover of an embodiment of the disclosed concepts.
Fig. 34 illustrates a cross-sectional view of the middle of a center cover segment of a hard cover of an embodiment of the disclosed concepts.
Fig. 35 illustrates a frontal view of the center cover segment of a hard cover of an embodiment of the disclosed concepts.
Fig. 36 illustrates a cross-sectional view along the middle of the center cover segment of a hard cover of an embodiment of the disclosed concepts.
Fig. 37 illustrates a top view of the center cover segment of a hardcover of an embodiment of the disclosed concepts.
Fig. 38 illustrates a perspective view from the side of a secondary cover segment of a hard cover of an embodiment of the disclosed concepts.
Fig. 39 illustrates a perspective view of a secondary cover segment of a hard cover of an embodiment of the disclosed concepts.
Fig. 40 illustrates a frontal view of a secondary cover segment of a hard cover of an embodiment of the disclosed concepts.
Fig. 41 illustrates a top view of a secondary cover segment of a hard cover of an embodiment of the disclosed concepts.
Fig. 42 illustrates a side view of the inner side of a secondary cover segment of a hard cover of an embodiment of the disclosed concepts.
Fig. 43 illustrates a side view of the outer side of a secondary cover segment of a hard cover of an embodiment of the disclosed concepts.
Fig. 44 illustrates a frontal view of a tertiary cover segment of a hard cover of an embodiment of the disclosed concepts.
Fig. 45 illustrates a cross-sectional view along the middle of a tertiary cover segment of a hard cover of an embodiment of the disclosed concepts.
Fig. 46 illustrates a top view of a tertiary cover segment of a hard cover of an embodiment of the disclosed concepts.
Fig. 47 illustrates a perspective view from above of a tertiary cover segment of a hard cover of an embodiment of the disclosed concepts.
Fig. 48 illustrates a perspective view from below of a tertiary cover segment of a hard cover of an embodiment of the disclosed concepts.
Fig. 49 illustrates a side view of the inner side of a tertiary cover segment of a hard cover of an embodiment of the disclosed concepts.
Fig. 50 illustrates a side view of the end section of a hard cover of an embodiment of the disclosed concepts.
Fig. 51 illustrates a bottom view of the end section of a hard cover of an embodiment of the disclosed concepts.
Fig. 52 illustrates a perspective view from above an alternative embodiment of the primary frame of an embodiment of the disclosed concepts.
Fig. 53 illustrates a frontal view of the primary frame depicted in Fig. 52.
Fig. 54 illustrates a frontal concept diagram of a novel hybrid wiper blade that is an embodiment not according to the invention as claimed.

### DETAILED DESCRIPTION

The following detailed description and the appended drawings describe and illustrate exemplary embodiments of the invention solely for the purpose of enabling one of ordinary skill in the relevant art to make and use the invention. As such, the detailed description and illustration of these embodiments are purely exemplary in nature and are in no way intended to limit the scope of the invention, or its protection, in any manner. It should also be understood that the drawings are not to scale and in certain instances details have been omitted, which are not necessary for an understanding of the present invention, such as conventional details of fabrication and assembly.

A novel bracketed and/or hybrid (i.e. having both a spring elastic "beam" and one or more brackets/frames) wiper blade having a cover is presented. Several novel concepts are introduced which can be used both with the disclosed novel wiper blade, or separately with various kinds of traditional, hybrid or beam wiper blades. These novel concepts include, but are not limited to, a novel "soft" cover for any type of wiper blade that is more effective at keeping debris out of the internal structure of the wiper blade than traditional covers; a novel segmented hard cover for any type of wiper blade whose segments connect to each other, and do not require connection to the frame, allowing for a tighter fit line between segments and thus reducing the chance of debris from getting into the mechanism.

According to the invention a wiper blade includes a wiper strip, a primary frame and a pair of secondary frames. The primary frame, has a top side and opposite ends, a connection device capable of connecting the wiper blade to a wiper arm disposed on the top side of the primary frame, and a connection structure disposed on each of the opposite ends of the primary frame. The pair of secondary frames, each having a flattened central pivot connection portion and two leg portions wherein each leg portion is straight and extends from the flattened central pivot connection portion, a pivot structure disposed on the flattened central pivot connection portion of the secondary frames. The pivot structures disposed on the secondary frames are connected to the connection structures on the ends of the primary frame.

In certain embodiments, the connection structure on the ends of the primary frame may comprise pivot extension walls. In certain embodiments the secondary frame may have a generally thin structure. In certain such embodiments the secondary frame may be a beam. In other such embodiments, the secondary frame may be a bracket. In certain such embodiments, the secondary frame may be provided with a strengthening bead.

In certain embodiments, the pivot structure is a separate structure attached to the secondary frames. In certain embodiments, the legs of the secondary frames may be symmetrical. In other embodiments, one of the two leg portions of a first secondary frame of the pair of secondary frames may be longer than the other leg portion of the first secondary frame of the pair of secondary frames. In certain embodiments at least one leg portion of at least one of the secondary frames is provided with a wiper strip holder capable of securing the wiper strip.

In certain embodiments, the wiper blade may also include at least one tertiary frame, wherein at least one leg portion of at least one of the secondary frames is provided with a tertiary frame connection structure, and wherein the at least one tertiary frame is connected to the tertiary frame connection structure of the least one of the secondary frames.

In certain such embodiments, the wiper blade may also include a cover. In certain such embodiments, the primary frame further comprises a cover-connection structures. In certain such embodiments the cover may be a segmented hard cover, and wherein the cover segments connect to one another via pivot joints, and wherein the cover may be secured to the wiper blades at cover connection structures on the primary frame or secondary frame.

In certain such embodiments the cover may include a cover center section and two cover side sections that are made from a soft, elastic material, wherein the cover side sections cover the ends of the cover center section and extend to the ends of the wiper blade. In certain such embodiments, a central cover portion may be made from a harder material than the two cover side sections.

In certain embodiments, a wiper blade comprising: a wiper strip, a force distribution structure having opposite ends, and a cover. The cover may include a cover center section having two end portions and two cover side sections that are made from a soft, elastic material, wherein the cover side sections cover the end portions of the cover center section and extend to and cover the opposing ends of the wiper blade.

In certain embodiments, a wiper blade may include a wiper strip, a primary frame and a pair of beams. The primary frame may have a top side and opposite ends, a connection device capable of connecting the wiper blade to a wiper arm disposed on the top side of the primary frame, and a connection structure disposed, on each of the opposite ends of the primary frame. The pair of beams, may each having a center portion and two leg portions extending in opposite directions from the center portion. The pivot structure may be connected to the center portion of the beams, and may connect to the connection structure on the ends of the primary frame.

In certain such embodiments the wiper blade may also include at least one tertiary frame, wherein at least one of the beams further comprises at least one tertiary frame connection structure and the at least one tertiary frame is connected to the at least one tertiary frame connection structure. In certain such embodiments, each of the leg portions of at least one of the beams may have a different curvature.

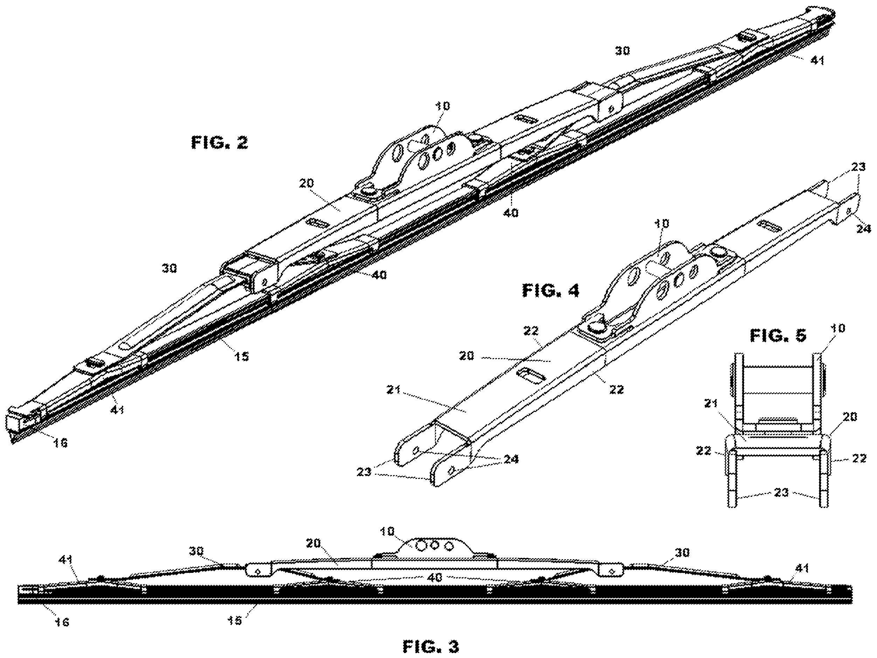

As can be seen in Figs. 2-4 the main support structure of the wiper blade preferably includes a primary frame **20** having a connection device **10** on its top side to which a connector and/or or adapter (not shown) can be used to connect the wiper blade to a wiper arm. Suitable connectors which allow the wiper blade to be connected to various different types of wiper arms are known in the art, and include U.S. Patent No. 6,640,380 and U.S. Patent Application Serial Nos. 13/558,624, and 13/560,585. Alternatively, the connection device **10** can be implemented to connect directly to a particular kind of wiper arm with or without the use of a connector and/or adapter. The connection device **10** may attach to the primary frame **20** through the use of welding, screws, rivets, claws, crimping or any other method known in the art. Alternatively , the connection device **10** may be an integrated part of the structure of the primary frame **20.** The connection device **10** may be made out of metal, plastic or any other suitable material known in the art or any combination of suitable materials known in the art.

The primary frame **20** may be made out of metal, plastic or any other suitable material known in the art, or any combination of suitable materials known in the art. The primary frame **20** may be straight or predominantly straight in shape when viewed from the front (as shown in Fig. 2-4), or may bear a more pronounced curvature. A connection to a pivot structure may be located at each end of the primary frame **20,** and allows the primary frame **20** to connect to a secondary frame **30,** in such a manner as to allow the secondary frame **30** to pivot about a pivot axis. A novel pivot structure which is the subject of U.S. Provisional Application 61/603,223 and the nonprovisional application filed concurrently herewith is described below, but any pivot structure known in the art may be used in connection with the described wiper blade.

As shown in Fig. 5, the profile of the primary frame **20** below the connection device **10,** when viewed along the longitudinal axis of the wiper blade, is preferably U shaped to add strength and rigidity to the primary frame. The primary frame may have a horizontal wall **21** from which two side walls **22** may descend vertically. The distance between the side walls **22** may be constant along the length of the primary frame **20,** or it may taper or expand as it approaches either end of the primary frame **20.** As described above, at either end of the primary frame is a connection to a pivot structure. One such connection is shown in Figs 2-5, as pivot extension walls **23.** These pivot extension walls **23** extend from the side walls **22** of the primary frame **20** and facilitate the connection of the primary frame **20** to the pivot structure. The pivot extension walls may be provided with holes **24** which will form part of the pivot structure, wherein a rivet, or protrusions may be placed to facilitate the pivoting of the secondary frame **30.** Persons of skill in the art will recognize that various alternative pivot structures, and connections to pivot structures might be used and remain within the scope of the disclosed concepts, including without limitation providing the pivot extension walls with protrusions instead of holes, or a rivet onto which other parts of the pivot structure can attach by in any known manner. The horizontal wall **21** may end before, or part way along, the pivot extension walls **23** in order to give the pivot structure a wider range of motion, or may optionally extend all the way to the end of, or past, the pivot extension walls **23.**

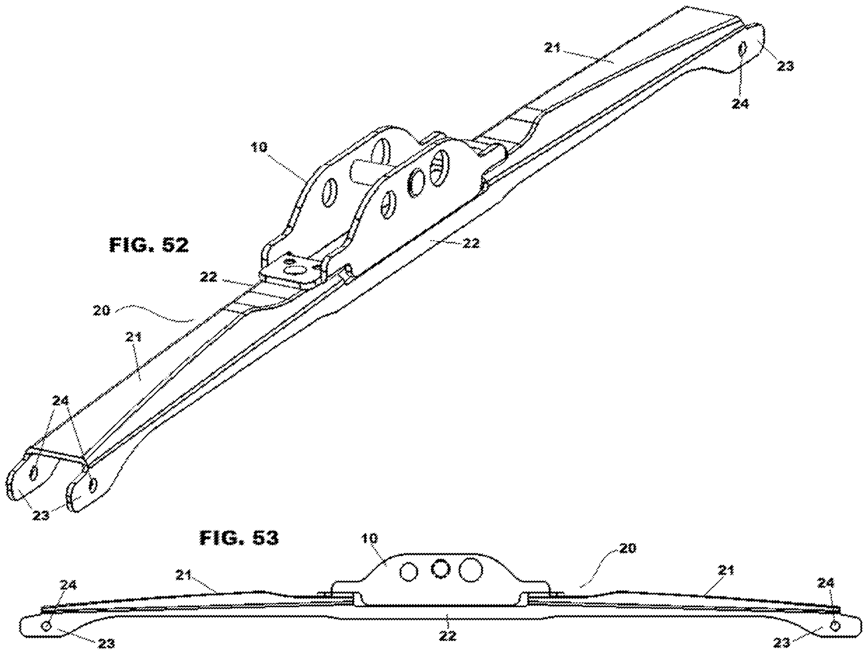

Figs. 52 and 53 show another embodiment of the primary frame **20** wherein the horizontal wall **21** running along the top of the primary frame **20** is angled such that from an area near the connection device **10** the surface of the horizontal wall **21** decreases in height it approaches the pivot extension walls **23.** The walls joining the horizontal wall **21** to the side walls **22** in this embodiment is also sloped (and in some embodiments, may be fluted), and the width of the horizontal wall **21** is narrower nearer to the connection device **10** than on the ends of the primary frame **20.** This allows a cover **60, 70** to have a greater degree of fluting and a narrower top, which can give it an aerodynamic effect similar to spoiler, which can improve the wiper blade's wind-lift performance.

As discussed in greater detail below, the primary frame **20** and/or the connection device **10** may also have cover-connection structures, such as projections, recesses, extension walls with holes, recesses, projections or rivets, etc., to facilitate the connection of the cover **60, 70,** or portions thereof, to the primary frame **20.**

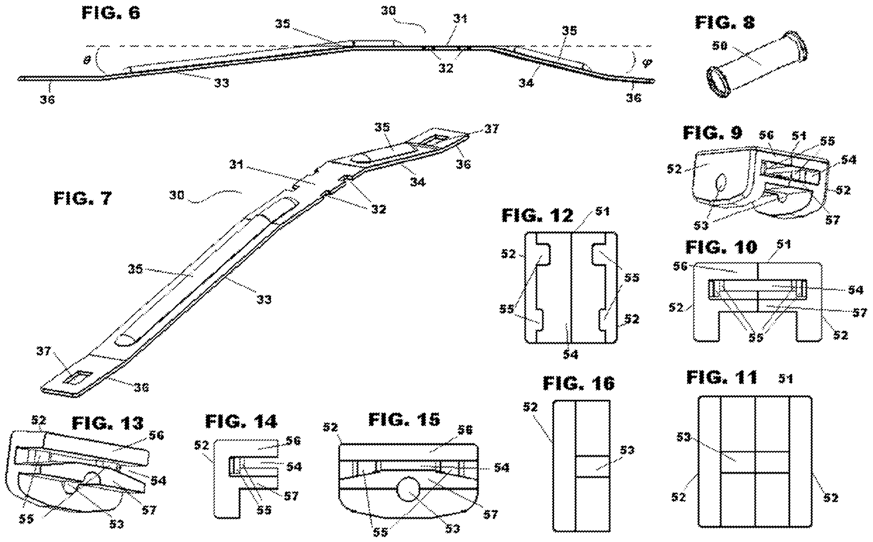

The secondary frame **30** is preferably made out of metal, such as steel, and can optionally be spring-elastic. The secondary frame **30** can also be made from plastic, or any other suitable material known in the art. In certain embodiments (not shown in the figures), the secondary frame **30** can be a curved, spring-elastic beam, making the such embodiments "hybrid" wiper blades, as they are a hybrid combining elements of a bracketed (or framed) wiper blade and a beam (or frameless) wiper blade. The secondary frame **30** preferably has a central pivot connection portion **31,** which connects the secondary frame **30** to the primary frame **20** via a pivot structure. The central pivot connection portion **31** is preferably flattened (as shown in Figs. 6 and 7), but may be curved. The central pivot connection portion **31** may have connecting structures, such as recesses **32;** projections; or pivot joint wings having either (1) a rivet or projections to attach to corresponding recesses, holes or clips in the primary frame's **20** pivot extension walls **23** or other connection to a pivot structure; or (2) recesses to receive corresponding projections, rivets, etc. in the primary frame's **20** pivot extension walls **23** or other connection to a pivot structure. Persons of skill in the art will recognize that numerous types of pivot structures can be used, whether directly connecting the secondary frame **30** to the primary frame **20,** or as described below in the novel pivot joint presented, using an intermediary piece (or pieces) to join the two.

On either side of the central pivot connection portion **31,** the secondary frame **30** has legs **33, 34.** The legs **33, 34** of the secondary frame **30** may be symmetric or asymmetric (as shown). The legs **33, 34** of the secondary frame **30** may be of the same, or different in lengths. In some embodiments, it may be advantageous to have the outer leg **33** (the leg further from the middle of the wiper blade) with a longer length than the inner leg **34** to allow a more compact primary frame **20,** while still allowing the wiper blade to wrap around the curvature of the windshield along its extremities, and improve wipe quality. Similarly, each leg **33, 34** may be independently straight, curved, or have a more elaborate structure depending on the vehicle(s) for which they are designed. In some embodiments having curved legs **33,34** it may be advantageous to have the curvature of the inner leg **34** (i.e. the leg closer to the center of the wiper blade) be different than the curvature of the outer leg **33.** In some embodiments, it can be particularly advantageous to provide the inner leg **34** with a sharper curvature than the curvature of the outer leg **33** in order to provide better wrapping of the wiper blade around the curvature of a windshield, and thus improving wipe quality. Similarly, in embodiments with straight legs **33, 34** it may be advantageous to provide the outer leg **33** with a smaller angle of descent from the central pivot connection portion ***θ*** than the angle of descent ***ϕ*** of the inner leg **34.**

As shown in Figs. 6 and 7, the secondary frame **30** may be a generally thin bracket, and may optionally be provided with a strengthening and stiffening bead **35,** giving it a more robust form, and increasing its lateral rigidity. The strengthening bead **35** may be provided along either, or both legs **33, 34,** and may also extend onto portions of the central pivot connection portion **31.**

As discussed above, persons of skill in the art will recognize that the pivoting structure joining the primary frame **20** and the secondary frame **30** may be made in many different ways known in the art, either by directly connecting the two frames directly, or by using intermediary structures to do so. One such method for connecting the primary frame **20** to the secondary frame **30,** described in greater detail in U.S. Provisional Patent Application No. 61/603,223, and in the concurrently filed non-provisional application entitled Hinged Wiper Blade filed concurrently herewith uses a turn-buckle holder **51** made up of two holder halves **52** held together by a rivet **50.** Thus, when assembled, one holder half **52** is attached to the secondary frame **30** opposite the other holder half **52** at the central pivot connection portion **31** wherein the central pivot connection portion **31** is inserted into the channel **54** formed between the upper channel wall **56** and lower channel wall **57** of each holder half **52.** The holder halves **52** are then pushed together such that the holder half's **52** projections **55** engage the recesses **32** on the central pivot connection portion **31** of the secondary frame **30.** Alternatively, in embodiments where the central pivot connection portion **31** has projections, the holder halves **52** can be implemented so as to have recesses to receive such projections.

Once the holder **52** halves have been pushed together such that the turn-buckle holder **51** contains the secondary frame **30** within its channel **54,** the turn-buckle holder **51** can be placed between the pivot extension walls **23** of the primary frame **20,** and a rivet **50** (shown in Fig. 8) can be passed through the holes **24** in the pivot extension walls **23** and through the rivet passage **53** in the turn-buckle holder **51** and secured on the opposite side. Persons of skill in the art will recognize that various modifications of such a structure can be made while remaining within the scope of the disclosed concepts, including without limitation, providing protrusions on the pivot extension walls **23** which can engage the rivet passage **53** in the holder, or providing the holder **51** with protrusions that can engage the holes **24** in the pivot extension walls **23.** Figures 9-12 show various views of the holder **51.** Fig. 12, in particular, shows a cross-section of the turn-buckle holder **51** taken through the channel **54** along its plane. As can be seen in Fig. 12, the projections inside the holder halves **52** (and thus also the corresponding recesses **32** in the secondary frame **30)** can be made of varying sizes, and need not be symmetric with the projections **55** in the opposite holder half **52.** In certain embodiments, such as that depicted in Fig. 12, two different sizes of projections **55** may be used in the holder halves **52** in order to facilitate proper alignment of the secondary frame **30** with the turn-buckle holder **51** during assembly. In an alternative embodiment, the turn-buckle holder 51 is a unitary structure. Such a structure can be made through insert molding, where the unitary turn-buckle holder is molded around the secondary frame. This provides a tighter grip by the turn-buckle holder on the secondary frame.

Figures 13-16 show various views of a holder half **52.** As can best be seen in Figs. 13 and 15, the lower channel wall **57** may be angled, or curved in order to allow pivoting of the secondary frame **30** within the turn-buckle holder **51,** or to facilitate the attachment of the turn-buckle holder to the secondary frame **30** by providing a wider entry point on the edges of the channel **54** in the holder half **52** while still providing a snug-fitting attachment in the middle portion of the holder half **52.** Alternatively, both the top channel wall **56** and the lower channel wall **57** may be shaped to follow the contour of the central pivot connection portion **31** of the secondary frame **30** or to facilitate insertion of the secondary frame **30** into the holder halves **52.** This novel pivot-hinge connection between the primary and secondary frames can be accomplished within the limited height of the pivot extension walls **23** of the primary frame **20,** and thus allows the disclosed wiper blade to maintain a relatively low profile, thereby reducing the effect of wind-lift on the wiper blade at high speeds and reducing or obviating the need for a spoiler on the wiper blade.

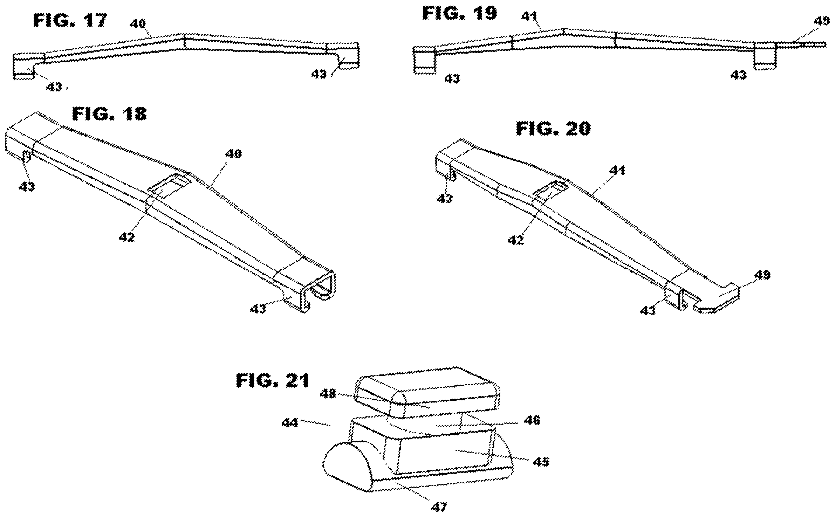

The ends of the secondary frame **30** may either be provided with a wiper strip holder, such as the claws **43** on the tertiary frames **40, 41,** or may with a connection extension **36** having a structure to connect to a tertiary frame **40, 41.** In certain embodiments, as shown in figs. 6-7 and 17-21 the connection between the secondary frame **30** and the tertiary frame(s) **41, 42** is formed by passing a pivoting stud **44** through a hole **42** in the central joint connection portion of the tertiary frame and a hole **37** in the connection extensions **36** on the secondary frame **30.** As shown in Fig. 21, the pivoting stud **44** has a tertiary base portion **45** sized to fit in the hole **42** of the tertiary frame **40, 41,** and a bottom portion **47** that is wider than the hole **42** in the tertiary frame **40, 41.** Thus tertiary frame **40, 41,** is supported on the bottom portion **47** of the pivoting stud **44** when the wiper blade is assembled. Accordingly the base portion **47** may be curved (as shown in Fig. 21) or angled in order to facilitate the pivoting of the tertiary frame **40, 41.** The pivoting stud **44** is also provided with a top portion **48** and a neck **46** wherein the diameter of the neck is approximately the same as the width of top portion **48** and smaller than the length of the top portion. Both are the top portion and the neck are sized to fit into the hole **37** of the secondary frame, and the height of the neck is approximately the same as the thickness of the connection extension **36** of the secondary frame **30.** During assembly, the pivoting stud's **44** top portion **48** and neck **46** are inserted into hole **37** in the connection extension **36** of the secondary frame **30,** and then turned such that the top portion **48** is perpendicular to the long side of the hole **37** in the connection extension **36.** Accordingly a high friction material, such as natural or synthetic rubber is preferred for the pivoting stud **44,** but plastic and/or other suitable materials may also be used. Persons of skill in the art will recognize that alternative forms of connecting the tertiary frames to the secondary frames may be used within the scope of the disclosed concepts, and that any of the forms for creating a pivoting structure/joint between the primary and secondary frames discussed above could be implemented between the secondary and tertiary frames, and vice versa.

The tertiary frames **40, 41** may be symmetrical tertiary frames **40** or asymmetrical tertiary frames **41.** In certain embodiments, as shown in Figs. 2-3, it may be advantageous to use symmetrical tertiary frames **40** on the connection extensions **36** nearer to the middle of the wiper blade, and asymmetric tertiary frames **41** on the connection extensions **36** nearer to the extremities of the wiper blade. In such embodiments it may be advantageous to put the longer leg of the asymmetric tertiary frames **41** extending outward from the wiper blade so as to provide a better wrap around the surface of a curved windshield of a vehicle.

Whether symmetric or asymmetric, the tertiary frames are provided with claws **43** which support the wiper strip **15.** The wiper blade described herein can use any of the traditional wiper strips known in the art, which generally have a base portion having grooves into which metal vertebrae are inserted to provide lateral support for the wiper strip **15.** Alternatively, the wiper blade described above can be implemented using the wiper strip carrier described in U.S. Patent Application Serial No. 13/558,624.

As shown in Figs. 19 and 20, the tertiary strip may have a structure to support and/or secure the cover **60**, **70.** The support structure shown in Fig. 19 and 20 is a chamfered "T" shaped structure **49** which the end of the cover can grip onto and support itself. Such a support structure can be put on either an asymmetric tertiary frame **41,** as shown, or on a symmetric tertiary frame **40.** Any other types of supporting structures for the cover **60, 70** described above with regard to the primary frame, or otherwise known in the art, including rivets, projections, recesses, wing walls having same, etc. can be used on the tertiary frames **40, 41.** Similar such supporting structures can also optionally be included in the secondary frame **30** as well.

The novel "soft" cover **60** introduced in this provisional patent application can be used with any known type of wiper blade, including the above-described wiper blade, beam blades,

The wiper blade covers on commercial wiper blades (whether with or without spoilers) generally have a hard plastic cap (see U.S. Patent Nos. 7,293,321 and 7,523,520) hovering over the connection device (See U.S. Patent No. 6,944,905). Particularly in beam blades, the hard plastic cap above the cover must leave a gap between the top surface of the cover and the bottom surface of the cap. Failure to leave such a gap results in the cap pushing down on the cover during the operation of the wiper blade, which compresses the material of the cover, and exerts a force onto the beam or other support structure, which can have adverse effects on the wipe quality of the wiper blade. Similarly, designing a connection device to form a contact seal with a cover can really only be done by custom-tailoring the wiper blade to a particular curvature of a particular windshield. Thus for aftermarket wiper blades, where the manufacturer does not know what windshield its products will be used on, the required specific calculations cannot be made across multiple windshields, and thus the same problem of cover-material compression and adverse forces on the beam/support structure may be present on some windshields but not others. Accordingly most wiper blade manufacturers (particularly after-market manufacturers) provide wiper blades with a gap between the cover and the cap or other structure that covers it. The novel "soft" cover **60** presented in this application solves these problems by reversing the order of the pieces. This allows the relatively softer material on the cover side sections **64** stretch when necessary as the wiper moves over the windshield, which lessens or eliminates the adverse forces put upon the beam, vertebrae and/or support structure of the wiper blade. At the same time the relatively harder material of the cover center section **61** helps secure the connection with the cover side sections **64.** Persons of skill in the art will recognize that it is not necessary for the cover center section **61** to be made from a harder material than the cover side sections **64.** Indeed they can be made from the same material. Suitable materials for both the cover center section **61** and the cover side sections **64** include natural and synthetic rubber, plastic, and other materials known in the art. However, in some embodiments it has been found advantageous to use a plastic material with a Shore hardness A values above 90 in the cover center section **61,** and plastic, natural rubber, or synthetic rubber material with Shore hardness A values between 60 and 90 in the cover side sections **64.** Improved results have been found using a material of Shore hardness A between 80 and 88 in the cover side sections **64,** as it is still flexible enough not to affect the beam/support structure, but hard enough to maintain good grips on the cover center section **61** as well as on the wiper blade's primary frame **20,** secondary frame **30,** tertiary frame **40, 41** and/or a beam (in the case of beam blades and/or hybrid blades).

Accordingly a cover center ("hard") section **61** is provided with side connecting structures **62,** and top recesses/holes **63** which receive corresponding side receiving structures **65** and top projections **66** from the cover side sections **64.** The cover center section **61** is preferably, but not necessarily, made from a harder material than the cover side sections **64.**

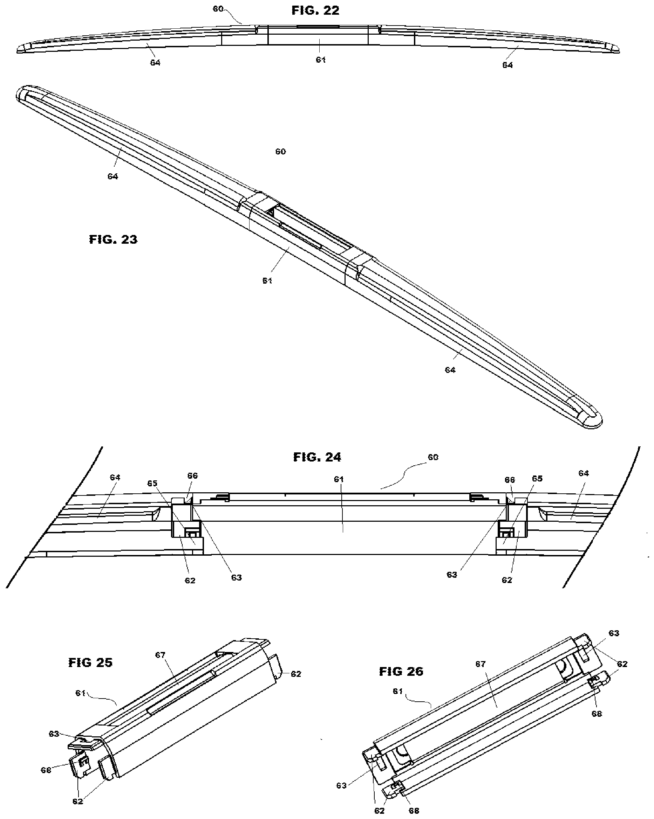

Figures 22-24 show the novel "soft" cover with the cover center section **61** and the cover side sections **64** connected. Fig. 24, which has a cross-sectional view, shows the mechanics of the connections between the sections of the cover **60,** showing the top projections **66** on the cover side sections **64** engaging the top recesses/holes **63** in the cover center section **61.**

As shown in Figs. 25-26, the top holes **63** in the cover center section **61** may be located on a recessed ledge such that when the cover side sections **64** are attached, a smooth, continuous surface is present on the combined structure (see Fig. 22-24). The side connecting structures **62** on the cover center section **61** may project outwardly from the main body of the of the cover center section **61,** and may optionally include bottom projections (shown in Figs 24-26) which grip a corresponding recess or hole in the cover side sections' **64** side receiving structures **65.** These side connecting structures **62** may further be laterally recessed in order to provide a smooth transition of the outer surfaces of the cover center section and the cover side sections **64** on the sides as well. Moreover, the recessed ledge housing the top hole **63** and the recessed side connecting structures **62** may be joined such that the cover side section lip which covers these structures forms a seal along the boundary of these structures to prevent any water or debris from entering therein. The cover center section may have a hole for the connection device to pass through, and may have internal grips **68** which grip may be used to grip the primary frame **20,** connection device **10,** and/or beam (in the case of beam or hybrid wiper blades).

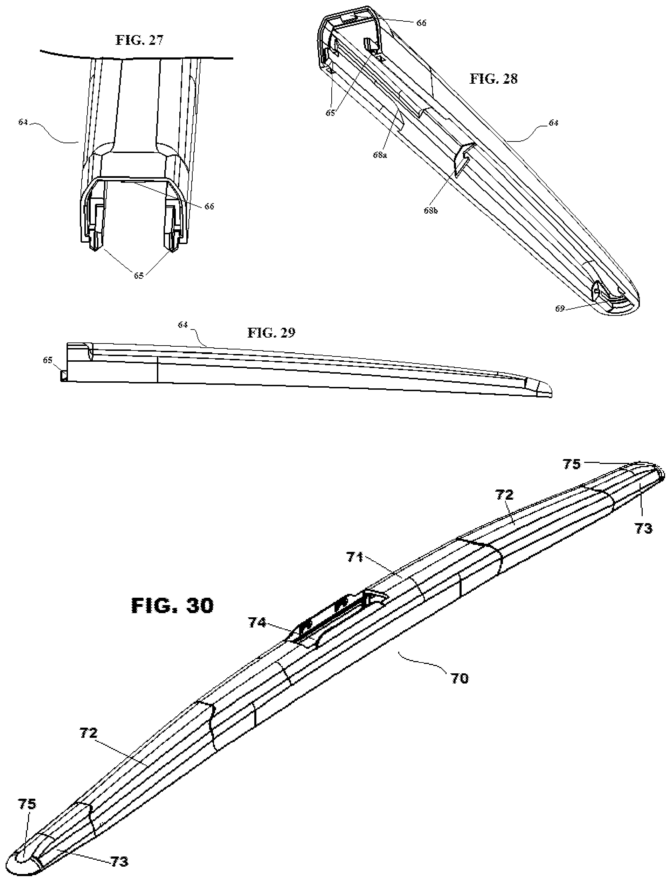

Figs. 27 and 28 show the corresponding structures on the cover side sections **64** that connect it to the cover center section **61.** The side receiving structures **65** on the cover side sections **64** receive the side connecting structures **62** from the cover center section **61.** As shown in Fig. 28, these side receiving structures **65** may have a recess or hole in them to receive the optional bottom projection of the side connecting structures **62.** For added ease of making the connection, and to ensure a better connection, as shown in Figs. 24 & 29, the side receiving structures **65** can project outwardly from the cover side section **64.** This increases the surface area of the side connections, and provides a guiding path for the insertion of the side connecting structures **62** into the side receiving structures **65.** The top projection **66** may be located on a lip of the which may be elevated, or have a smaller thickness than the main walls of the cover side section in order to facilitate the smooth transition in the outer surface of the joined cover center section **61** and cover side sections **64.** This lip may also help form a seal to keep water and debris out of the internal structure of the wiper blade. Accordingly, the top projection **66** and side receiving structures **65** together with the top hole **63** and side connecting structures form a three sided locking mechanism which ensures better protection against the elements without interfering with the operation of the underlying support structure, whether it is brackets or beams.

Fig. 28 also shows several different kinds of internal grip structures. The contoured grip **68a** extends back from the side receiving structures **65,** gripping and following the contour of the bottom of the primary frame **20,** including sloping downwards towards the end of the grip structure to follow the contour of the pivot extension walls **23.** The rib grip **68b** acts both as a structural supporting rib, and as a loose grip on the secondary frame **30,** and has a recess cut into it to accommodate a bead **35** on the secondary frame **30.** This loose grip allows the secondary frame to move upwards and downwards during operation of the wiper blade within a set range without interfering with the movement of the secondary frame **30.** The loose internal grip can also be used on the "quarter" portion of beam/hybrid blades - half way between the center and the end of the beam - to give that part of the beam room to bend without interfering with its behavior. Intermittent or continuous claw-like grips (not shown) can also be used, particularly on beam blades and/or hybrid blades where the cover must be secured to the beam. One possible internal end grip **69** is also shown in Fig. 28. This grip has a slotted pocket in the end portion of the cover which receives the chamfered "T" structure on the tertiary frame **41** of the above-described wiper blade. Other types of end grips may be used, including detents, dovetails, projections, and all such end grips described in U.S. Patent Application Serial Nos. 13/453,601, 13/572,100 and 13/587,389.

A second type of novel cover - a "hard" cover **70** is presented in Figs. 30-52. As shown in Fig. 30, the cover **70** may be composed of multiple segments. A center cover segment **71** has an opening **74** through which the connection device **10** can be passed. Secondary cover segments **72** can be attached to each side of the central cover segment **71.** Optional, tertiary cover segments **73** can be attached to the outer ends of the secondary cover segments **72.** Additional cover segments can also be used on covers of this type. The outermost end of the outermost segment has an end section **75.** The segments of the "hard" cover are preferably made of a plastic, and need not actually be "hard". It can be advantageous to use a plastic having a Shore hardness A of greater than 90. However, any suitable material known in the art can be used to make the cover **70,** including materials having a Shore hardness A values of 90 or less.

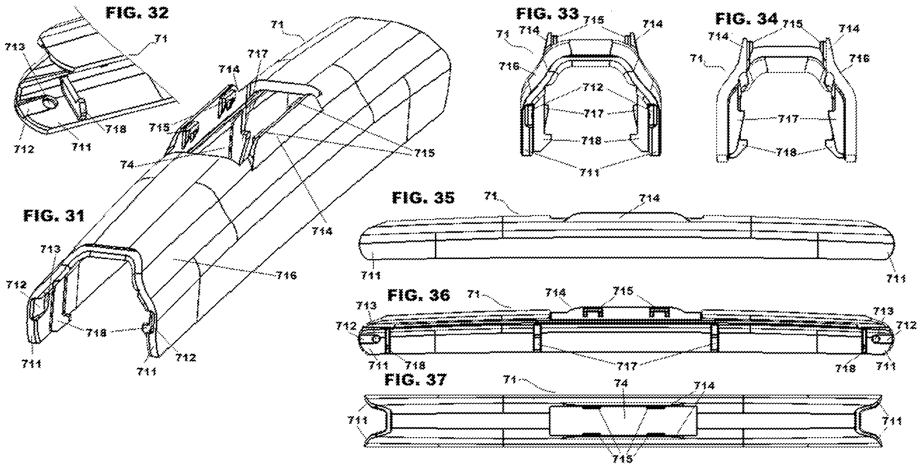

Figs. 31-37 illustrate various views of the center cover segment **71** of the cover **70.** The end sections of the center cover segment **71** has receiving walls **711,** which are used to connect to the secondary cover segments **72** using a pivoting connection. The receiving walls **711** may have a receiving channel **712** and a seating recess **713** which receives a projection **722** from the secondary cover segments **72.** The a seating hole may also be used in place of a seating recess **713.** In some embodiments it may be advantageous for the receiving walls to be narrower than the main walls of the center cover segment **71,** or to have the receiving walls **711** taper so as to allow them to deflect enough to allow the insertion of the projections **722** of the secondary cover segment **72.** Persons of skill in the art will recognize that the projection may be located on the center cover segment **71,** and that the seating recess may be located on the secondary cover segment **72.** Likewise other pivoting connections known in the art, including the use of rivets, or additional structures known in the art which allow the center cover segment and the secondary cover segment to form a pivoting connection may also be used.

The center cover segment **71** may also have a lip **714** which can cover the sides of the connection device, and hold grips **715** and/or other structures which can help secure the center cover segment **71** to the primary frame **20.** Additional internal grips **717, 718** can be located along the inner surface of the center cover section **71** and may also help secure the center cover section to the primary frame **20.** As can be seen in Figs. 33 and 34, the internal grips **717, 718** may be implemented as appropriate to fit a particular design of primary frame **20.** For instance the inner internal grips **717** are sized to secure the shorter middle portion of the side walls **22** of the primary frame **20,** while the outer internal grips **718** are sized to secure the larger pivot extension walls **23** of the primary frame **20.**

As shown in Figs 30, 31, 33 and 34, the cover **70** may be provided with fluting **716** on its outer walls. The fluting may act as an aerofoil to help increase the downward force on the wiper blade at higher speeds. Alternatively the cover may be shaped to embody a spoiler, with or without fluting. Such spoilers can be embodied as a symmetric isosceles triangle (with or without fluting), as an asymmetric right triangle (with or without fluting), or in any other suitable shape. Similarly, embodiments of the cover **70** that do not have a spoiler may also be symmetric, as shown in Fig. 30 - 51, or asymmetric.

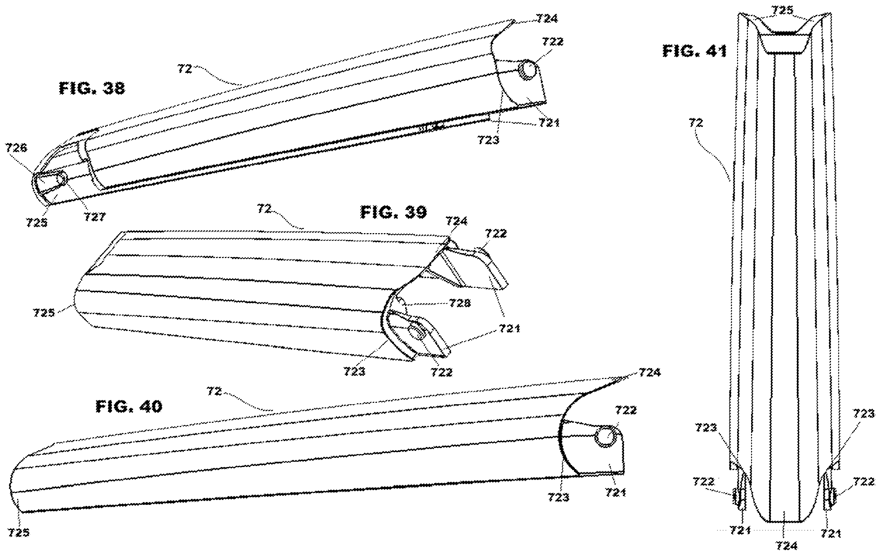

Figs 38-43 illustrate various views of the secondary cover segments **72** of the cover **70.** The inner side of the secondary cover segment includes a connecting wall **721** which contains a projections **722** which pass through the receiving channel **712** and into the seating recess **713** of the receiving wall **711** of the center cover segment **71.** The connecting wall **721** may be narrowed, or may taper in order to bend to allow the insertion of the projection **722** into the seating recess **713.** As best shown in Figs. 39 and 41, the connecting wall **721** is preferably laterally recessed, such that the receiving wall **711** of the center cover segment **71** can cover it. The outer edge **723** of the inner side of the secondary cover segment **72** and the edge of the receiving wall **711** may have complementary shapes which allow the secondary cover segment **72** and the center cover segment **71** to form a pivot joint that can move during the operation of the windshield wiper as the curvature of the windshield underneath the wiper strip **15** changes. The outer edge **723** of the inner side of the secondary cover segment **72** may also define a covering portion **724** which covers a portion of the outer edge of the center cover segment **71,** and can help prevent water, ice or debris from entering the internal structure of the wiper blade. Persons of skill in the art will recognize that a covering portion can instead be located on the receiving walls of the center cover segment, and can cover corresponding portions of the inner side of the secondary cover segment. Persons of skill in the art will also recognize that a covering wall (not shown) can be used to join the portions of the edge of the segment that is covered by the covering portion **724,** in order to increase the protection against debris, water and ice at the joint between the center cover segment and the secondary cover segment.

The secondary cover segment may have an end section **75,** or it may have a second receiving wall **725** with a second receiving channel **726** and a second seating recess **727** which connect the secondary cover segment **72** to a tertiary cover segment **73.** Persons of skill in the art will recognize that it is not necessary for the cover **70** to be symmetric, or to have the same number of segments on each side of the center cover segment **71.** As discussed above, persons of skill in the art will also recognize that the projections and recesses connecting the cover segments may be reversed, and that other pivoting structures such as rivets may be used to make the pivoting connection between the cover segments.

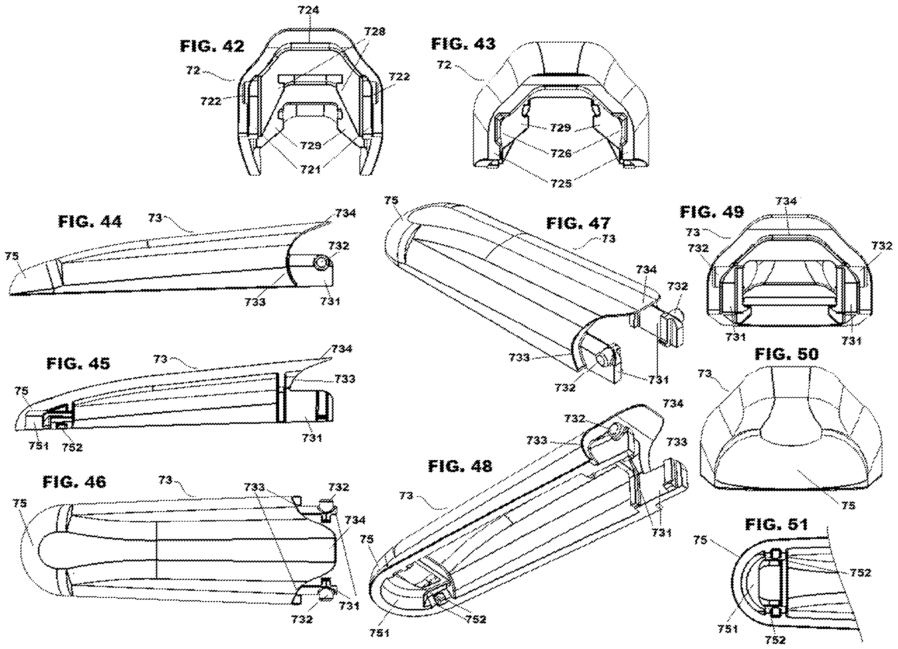

As illustrated n Figs. 42 and 43, the secondary cover segment **72** may also have internal grips **728, 729** which can grip the portion of the frame that the secondary cover segment **72** covers. The internal grips **728, 729** depicted are sized to secure the secondary frame **30** of the wiper blade. The internal grips may be sized to form a tight grip on the corresponding portion of the frame, or may be sized larger than the frame in order to give the frame a defined freedom of movement within the grip to allow for greater variability in its positioning during the operation of the wiper blades, as the curvature of the windshield under the wiper changes.

An embodiment of a tertiary cover segment is illustrated in Figs. 33-50. The depicted tertiary cover segment **73** has a second connecting wall **731** having a second projection **732** which engages the second seating recess **727** on the second receiving wall **725** of the secondary cover segment **72.** The tertiary cover segment **73** may have an outer edge **733** which is shaped complementary to the second receiving wall **725** of the secondary cover segment **72** so as to allow the joint between the secondary cover segment **72** and the tertiary cover segment **71** to pivot and move during the operation of the wiper blade. The tertiary cover segment **73** may have a second covering portion **734** which covers the corresponding portion of the receiving wall **725** of the secondary cover segment **72** so as to help prevent water, ice and debris from entering the internal structure of the wiper blade. The edge of the second receiving wall **725** may be provided with a wall to help cover the region underneath the second covering portion **734** to add additional protection against the elements.

As can be seen in Figs. 46 and 47, on the second connecting wall, opposite the second projections **732,** reinforcing projections may be added to strengthen the integrity of the second connecting wall **731,** and the connection between the secondary cover segment **72** and the tertiary cover segment **73.** The second connecting wall **731** may be narrow, or may taper, so as to allow it to deflect enough to allow the second projection to enter the second seating recess **727.** Again, a hole may be used in place of the second seating recess **726,** and other pivoting connections known in the art, such as rivets, may also be used to establish the joint connection between the tertiary cover segments **73** and the secondary cover segments **72.**

The receiving channel **712** and second receiving channel **726** may be provided with a ramp or chamfer structure to facilitate the insertion of the corresponding projection **722** and second projection **732** into same.

The tertiary cover segments **73** may be provided with internal grips to secure the segments to the corresponding portion of the cover, as described above relating to the internal grips of the center cover segment **71** and the secondary cover segments **72.** The tertiary cover segment may also be provided with ribs between the side walls to give them additional structural strength and stability. Indeed, ribs may be provided to any of the cover segments **71, 72, 73,** or cover sections **61, 62** described above, and the ribs may also help form the internal grips of all such structures. Persons of skill in the art will also recognize that there are numerous shapes that the internal grips can take, as described above, or as otherwise known in the art, including "L" shaped grips, "C" shaped grips, etc.

The tertiary cover segment **73** may optionally connect to additional cover segments (not shown), or may have on their outer end an end section **75.** The end section **75** of the cover **70** may optionally have a securing structure, connecting the end section to the frame of the wiper blade. One such structure is depicted in Fig. 51, shows a recess **751** and a detent **752** that are shaped to engage the "T" shaped ends of the outer tertiary frames **41** of the wiper blades. As described above in connection with the "soft" cover, numerous structures are known in the art for forming that sort of connection, including without limitation the structures described in the patents and patent applications incorporated therein by reference, and all such structures and other structures known in the art may be used, and are contemplated as within the scope of the disclosed concepts.

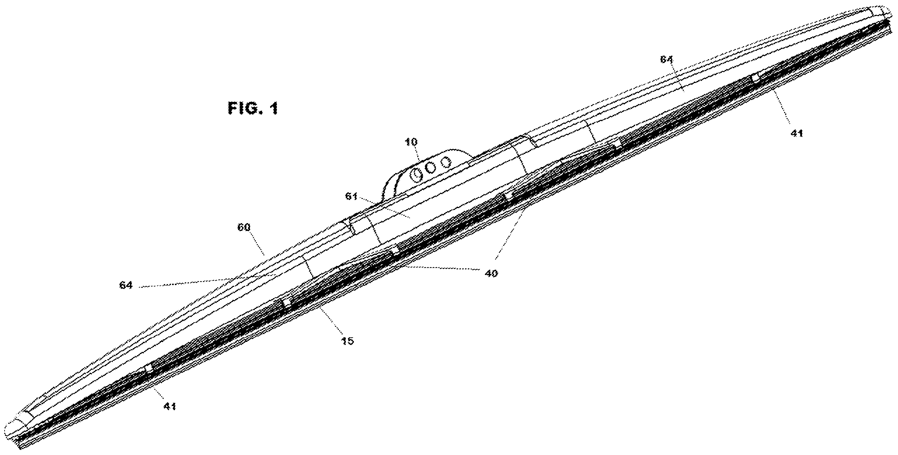

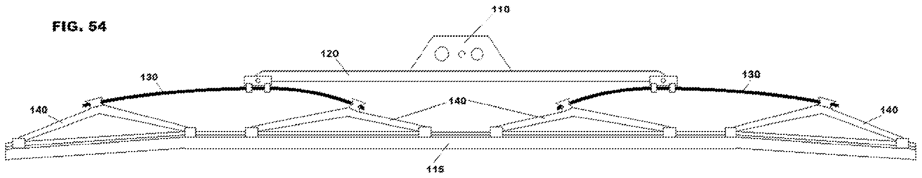

A novel hybrid wiper blade is presented in Fig. 54. A specific embodiment of this hybrid wiper blade is set forth in concurrently filed provisional patent application entitled Hinged Wiper Blade filed concurrently herewith. The novel hybrid wiper blade generally has a primary frame, which may be as described above, and can be generally flat, curved, triangular, or have any other suitable desired shape. The primary frame **120** preferably has a connection device **110** attached to its top surface or formed integrally therewith, in any of the methods known in the art or depicted above. At either end the primary frame connects to a pair of beams **130,** preferably made from spring-elastic steel, although other suitable materials may be used. As described above with respect to the connection device **1** in Fig. 1, any manner of connector, adaptor or specialized design for a particular wiper arm known in the art can be used with the connection device **110.**

The connection between the beams **130** and the primary frame **120** is preferably formed by a pivot joint of some sort. This may be accomplished in any method currently known in the art. For example the beams **130** may be provided with structures (similar to a connection device **10, 110**) having a two pairs of claws which are crimped, welded or form-fitted onto the beams **130,** and having two parallel side walls having which may have projection, recesses or holes, rivets or other structures which can attach to recesses or holes, projections, clips and/or holes, and other complementary structures on the ends of the primary frame **120** in order to form a pivoting connection. The beams **130** may be symmetric across the pivot joint in length and/or curvature, or asymmetric (as shown in Fig. 54).

Tertiary frames **140** are secured to the beams **130,** and in turn secure the wiper strip (and any vertebrae, and/or wiper strip carrier as described above. The connection between the beams **130** and the tertiary frames **140** may be made in any manner known in the art, including the use of pivoting studs **44** and other pivot joints known in the art as described above. Like the inner and outer tertiary frames **40,41** described above, the hybrid blade depicted in Fig. 54 may have symmetric or asymmetric tertiary frames **140.** Additionally, any one or more of the connection device **110,** primary frame **120,** beams **130,** and tertiary frames **140** may be provided with structure to help it connect to a cover **60, 70** described above, or any other type of cover or spoiler known in the art.

## Claims

1. A wiper blade comprising:
a wiper strip,
a primary frame (20, 120), having a top side and opposite ends, a connection device (10, 110) capable of connecting the wiper blade to a wiper arm disposed on the top side of the primary frame (20, 120), and a connection structure disposed on each of the opposite ends of the primary frame (20, 120), and further comprising a horizontal wall (21) from which two side walls (22) descend vertically;
a pair of secondary frames (30, 130), each having a flattened central pivot connection portion (31) and two leg portions (33, 34) wherein each leg portion (33, 34) is straight and extends from the flattened central pivot connection portion (31), a pivot structure disposed on the flattened central pivot connection portion (31) of the secondary frames (30);
wherein the pivot structures disposed on the secondary frames (30, 130) are connected to the connection structures on the ends of the primary frame (20, 120).

2. The wiper blade of claim 1 wherein the connection structure on the ends of the primary frame (20) comprises pivot extension walls (23).

3. The wiper blade of claim 1 wherein the secondary frame (20, 120) has a generally thin structure;

4. The wiper blade of claim 3 wherein the secondary frame (20, 120) is a beam, or a bracket.

5. The wiper blade of claim 4 when the secondary frame is a bracket wherein the secondary frame is provided with a strengthening bead (35).

6. The wiper blade of claim 1 wherein the pivot structure is a separate structure attached to the secondary frames (30, 130).

7. The wiper blade of claim 1 wherein the legs (33, 34) of the secondary frames (30) are symmetrical

8. The wiper blade of claim 1 wherein one of the two leg portions (33, 34) of a first beam of the pair of beams is longer than the other leg portion (33, 34) of the first beam of the pair of beams.

9. The wiper blade of claim 1 wherein at least one leg portion (33, 34) of at least one of the secondary frames (30, 130) is provided with a wiper strip holder capable of securing the wiper strip.

10. The wiper blade of claim 1 further comprising at least one tertiary frame (40, 41, 140), wherein at least one leg portion (33, 34) of at least one of the secondary frames (30, 130) is provided with a tertiary frame connection structure, and wherein the at least one tertiary frame (40, 41, 140) is connected to the tertiary frame connection structure of the least one of the secondary frames (30, 130).

11. The wiper blade of claim 1 further comprising a cover (60, 70).

12. The wiper blade of claim 11 wherein the primary frame (20, 120) further comprises a cover-connection structures.

13. The wiper blade of claim 11 wherein the cover is a segmented hard cover (70), and wherein the cover segments (72) connect to one another via pivot joints, and wherein the cover is secured to the wiper blades at cover connection structures on the primary frame (20, 120) or secondary frame (30, 130).

14. The wiper blade of claim 11 wherein the cover (60) comprises a cover center section (61) and two cover side sections (64) that are made from a soft, elastic material, wherein the cover side sections cover the ends of the cover center section and extend to the ends of the wiper blade.

15. The wiper blade of claim 14 wherein a central cover portion (61) is made from a harder material than the two cover side sections (64).

## Patentansprüche

1. Wischerblatt, Folgendes umfassend:
eine Wischerleiste,
einen primären Rahmen (20, 120), der eine Oberseite und entgegengesetzte Enden, eine Verbindungsvorrichtung (10, 110), die dazu eingerichtet ist, das Wischerblatt mit einem auf der Oberseite des primären Rahmens (20, 120) angeordneten Wischerarm zu verbinden, und eine Verbindungsstruktur, die auf beiden entgegengesetzten Enden des primären Rahmens (20, 120) angeordnet ist, aufweist und ferner eine horizontale Wand (21) umfasst, von der sich zwei Seitenwände (22) vertikal nach unten erstrecken;
ein paar sekundäre Rahmen (30, 130), die jeweils einen abgeflachten mittigen Drehverbindungsabschnitt (31) und zwei Schenkelabschnitte (33, 34) aufweisen, wobei jeder Schenkelabschnitt (33, 34) gerade ist und sich vom abgeflachten mittigen Drehverbindungsabschnitt (31) erstreckt, wobei eine Drehstruktur auf dem abgeflachten mittigen Drehverbindungsabschnitt (31) der sekundären Rahmen (30) angeordnet ist;
wobei die auf den sekundären Rahmen (30, 130) angeordneten Drehstrukturen mit den Verbindungsstrukturen an den Enden des primären Rahmens (20, 120) verbunden sind.

2. Wischerblatt nach Anspruch 1, wobei die Verbindungsstruktur an den Enden des primären Rahmens (20) Drehverlängerungswände (23) umfasst.

3. Wischerblatt nach Anspruch 1, wobei der sekundäre Rahmen (20, 120) eine im Allgemeinen schmale Struktur aufweist.

4. Wischerblatt nach Anspruch 3, wobei der sekundäre Rahmen (20, 120) ein Balken oder eine Schelle ist.

5. Wischerblatt nach Anspruch 4, wobei der sekundäre Rahmen eine Schelle ist, wobei der sekundäre Rahmen mit einer Verstärkungswulst (35) versehen ist.

6. Wischerblatt nach Anspruch 1, wobei die Drehstruktur eine separate Struktur ist, die an den sekundären Rahmen (30, 130) befestigt ist.

7. Wischerblatt nach Anspruch 1, wobei die Schenkel (33, 34) der sekundären Rahmen (30) symmetrisch sind.

8. Wischerblatt nach Anspruch 1, wobei einer der zwei Schenkelabschnitte (33, 34) eines ersten Balkens des Balkenpaars länger als der andere Schenkelabschnitt (33, 34) des ersten Balkens des Balkenpaars ist.

9. Wischerblatt nach Anspruch 1, wobei mindestens ein Schenkelabschnitt (33, 34) mindestens eines der sekundären Rahmen (30, 130) mit einer Wischerleistenhalterung versehen ist, die die Wischerleiste fixieren kann.

10. Wischerblatt nach Anspruch 1, ferner mindestens einen tertiären Rahmen (40, 41, 140) umfassend, wobei mindestens ein Schenkelabschnitt (33, 34) mindestens eines der sekundären Rahmen (30, 130) mit einer tertiären Rahmenverbindungsstruktur versehen ist und wobei der mindestens eine tertiäre Rahmen (40, 41, 140) mit der tertiären Rahmenverbindungsstruktur mindestens eines der sekundären Rahmen (30, 130) verbunden ist.

11. Wischerblatt nach Anspruch 1, ferner eine Abdeckung (60, 70) umfassend.

12. Wischerblatt nach Anspruch 11, wobei der primäre Rahmen (20, 120) ferner Abdeckungsverbindungsstrukturen umfasst.

13. Wischerblatt nach Anspruch 11, wobei die Abdeckung eine segmentierte Hartabdeckung (70) ist und wobei die Abdeckungssegmente (72) über Gelenke miteinander verbunden sind und wobei die Abdeckung an Abdeckungsverbindungsstrukturen am primären Rahmen (20, 120) oder sekundären Rahmen (30, 130) an den Wischerblättern fixiert ist.

14. Wischerblatt nach Anspruch 11, wobei die Abdeckung (60) einen Abdeckungsmittelabschnitt (61) und zwei Abdeckungsseitenabschnitte (64) umfasst, die aus einem weichen, elastischen Material bestehen, wobei die Abdeckungsseitenabschnitte die Enden des Abdeckungsmittelabschnitts abdecken und sich zu den Enden des Wischerblatts erstrecken.

15. Wischerblatt nach Anspruch 14, wobei ein Abdeckungsmittelabschnitt (61) aus einem härteren Material besteht als die zwei Abdeckungsseitenabschnitte (64) .

## Revendications

1. Balai d'essuie-glace comprenant :
une bande d'essuie-glace,
un cadre primaire (20, 120), ayant un côté supérieur et des extrémités opposées, un dispositif de liaison (10, 110) pouvant relier le balai d'essuie-glace à un bras d'essuie-glace disposé sur le côté supérieur du cadre primaire (20, 120), et une structure de liaison disposée sur chacune des extrémités opposées du cadre primaire (20, 120), et comprenant en outre une paroi horizontale (21) de laquelle deux parois latérales (22) descendent verticalement ;
une paire de cadres secondaires (30, 130), chacun ayant une partie de liaison à pivot central aplatie (31) et deux parties de jambe (33, 34), chaque partie de jambe (33, 34) étant droite et s'étendant à partir de la partie de liaison à pivot central aplatie (31), une structure de pivot étant disposée sur la partie de liaison à pivot central aplatie (31) des cadres secondaires (30) ;
les structures de pivot disposées sur les cadres secondaires (30, 130) étant reliées aux structures de liaison sur les extrémités du cadre primaire (20, 120).

2. Balai d'essuie-glace selon la revendication 1, la structure de liaison sur les extrémités du cadre primaire (20) comprenant des parois d'extension de pivot (23).

3. Balai d'essuie-glace selon la revendication 1, le cadre secondaire (20, 120) ayant une structure généralement mince.

4. Balai d'essuie-glace selon la revendication 3, le cadre secondaire (20, 120) étant une poutre, ou un support.

5. Balai d'essuie-glace selon la revendication 4 lorsque le cadre secondaire est un support, le cadre secondaire étant pourvu d'un bourrelet de renforcement (35) .

6. Balai d'essuie-glace selon la revendication 1, la structure de pivot étant une structure séparée fixée aux cadres secondaires (30, 130).

7. Balai d'essuie-glace selon la revendication 1, les jambes (33, 34) des cadres secondaires (30) étant symétriques.

8. Balai d'essuie-glace selon la revendication 1, une des deux parties de jambe (33, 34) d'une première poutre de la paire de poutres étant plus longue que l'autre partie de jambe (33, 34) de la première poutre de la paire de poutres.

9. Balai d'essuie-glace selon la revendication 1, au moins une partie de jambe (33, 34) d'au moins un des cadres secondaires (30, 130) étant pourvue d'un support de bande d'essuie-glace pouvant fixer la bande d'essuie-glace.

10. Balai d'essuie-glace selon la revendication 1 comprenant en outre au moins un cadre tertiaire (40, 41, 140), au moins une partie de jambe (33, 34) d'au moins un des cadres secondaires (30, 130) étant pourvue d'une structure de liaison de cadre tertiaire, et l'au moins un cadre tertiaire (40, 41, 140) étant relié à la structure de liaison de cadre tertiaire de l'au moins un des cadres secondaires (30, 130).

11. Balai d'essuie-glace selon la revendication 1, comprenant en outre un couvercle (60, 70).

12. Balai d'essuie-glace selon la revendication 11, le cadre primaire (20, 120) comprenant en outre des structures de liaison au couvercle.

13. Balai d'essuie-glace selon la revendication 11, le couvercle étant un couvercle dur segmenté (70), et les segments de couvercle (72) étant reliés entre eux par des articulations à pivot, et le couvercle étant fixé aux balais d'essuie-glace au niveau des structures de liaison au couvercle sur le cadre primaire (20, 120) ou le cadre secondaire (30, 130).

14. Balai d'essuie-glace selon la revendication 11, le couvercle (60) comprenant une section centrale de couvercle (61) et deux sections latérales de couvercle (64) qui sont en un matériau souple et élastique, les sections latérales de couvercle couvrant les extrémités de la section centrale de couvercle et s'étendant jusqu'aux extrémités du balai d'essuie-glace.

15. Balai d'essuie-glace selon la revendication 14, une partie de couvercle centrale (61) étant en un matériau plus dur que les deux sections latérales de couvercle (64) .
